# EUROPEAN PATENT APPLICATION

(11) **EP 2 538 375 A1**
(43) Date of publication of application: **26.12.2012**
(21) Application number: 11171175.0
(22) Date of filing: 23.06.2011
(51) Int. Cl.: G06Q 10/00, H04L 12/58

(54) **A communication platform for iterative multiparty convergence towards a microdecision**

(71) Applicant: NV Mobicage, 9080 Lochristi (BE)
(72) Inventor: Audenaert, Geert Michel Maria, 9290 OVERMERE (BE); D'Halluin, Carl Rene, 9090 MELLE (BE)
(74) Representative: Plas, Axel Ivo Michel

(57) **Abstract**

According to the invention there is provided a platform (10) for supporting iterative convergence towards a micro-decision that is configured such that:
• said participants (100) can modify their selection of means (400) for replying to a message (300) comprising a plurality of predetermined responses (310) in a plurality of iterations; and
• said participants (100) are provided with the most recent iteration of said selection of said participants (100).

## Description

### Field of the Invention

The present invention generally relates to a communication platform that allows for interactive multiparty convergence towards a micro-decision.

### Background of the Invention

Reaching a micro-decision by means of electronic communication media can be a daunting and time consuming task, even if the subject of the decision is simple and the group of people involved is relatively small. One classical example is a "Where do we go for dinner tonight?", "Can somebody pick me up at the airport?" or "What time do you want to meet?" scenario. Even when only a limited number of possible answers are involved, for example two or three and only a limited number of participants are involved, for example two or three. In the context of personal computers and mobile devices one of several options for the organiser of the poll is for example to send an e-mail message, an instant message or an SMS to the participants of which feedback is expected. The poll participants then are able to reply to this initial message. In the best scenario this generates a consistent stream of follow up messages that contains the feedback of the participants and finally the decision made by the poll organiser. However even in this optimistic scenario it is difficult for the poll organiser to keep an instant overview on the feedback provided by the poll participants on which to base the micro-decision. Furthermore this gets even more complicated in less optimal scenario's where participants reply on outdated follow up message, follow up messages are not addressed to all of the poll participants, participants provide feedback after a final decision was made, and so on.

Several systems have been proposed to handle the problems raised above. The general theme in the proposed solutions is that the sender sends a message which comprises structured content in order to stream line the processing of a multiparty micro-decision poll.

In email systems voting buttons have been proposed, such as for example described in US2006/0168067. In such a system the sender of the email message adds voting buttons that correspond to possible responses to the e-mail poll. To reply, each recipient selects a voting button and sends their reply. When the replies are received at the sender's email program and the sender is able to see the tallied voting results, a list of the recipients, their responses and the time of their responses.

Also a similar approach has been developed for instant messaging applications, such as for example described in EP1624613 or US2008/0189620. Here the sender can embed a structured communication into an instant message providing a plurality of possible replies for the receiver in order to support a multiparty micro-decision poll. The responses of the participants are then processed and the sender can check on a compiled set of the voting results, such as for example a percentage associated with the share of participants voting for a particular option.

Further there is also known an online service for organising meetings available at http://www.doodle.com which provides the possibility for a poll organiser to send out a poll with suitable dates for a meeting to a plurality of participants. The participants can submit their feedback on the website by entering their name and select one or more preferred options. The poll organiser is presented with the choices of each participant and a tallied result of the options available. Although the information is handled centrally on the doodle website, the notification of the poll organiser and participants is handled through a stream of email messages.

All the above mentioned systems suffer from several drawbacks, which are most pertinent when the iterative aspect of most micro-decision processes surfaces. Most micro-decision processes are not a one-shot process, in which a sender can create a multiparty poll, the participants provide their feedback, the sender processes it and makes a final decision. In real life situations there is an iterative aspect to most micro-decision processes as the subsequent decisions of participants to a multiparty poll are likely to be influenced by choices made by other participants in an iterative way. For example, several participants might be prompted to revise their initial choice when the choice of a particular influential participant to the poll becomes available.

Furthermore, although the prior art systems already provide some support for the sender to set up and process the poll, there is still a lot of room for improvement as regards user friendliness in this respect. Furthermore also real time feedback of the status of the poll in a way that allows rapid analysis of the overall results of the poll as well as the choices of individual participants in order to support convergence towards a micro-decision is still not available. These drawbacks are especially relevant when the sender or participants of the poll are making use of a mobile device, such as for example a mobile phone with limited capabilities for displaying, user input, power consumption and wide area network availability as compared to a general personal computer. Furthermore in order to enable real time interaction during the iterative micro-decision process latency on sending and receiving messages must be minimal and message delivery must be guaranteed.

In known systems the sender and recipients typically do not know whether other recipients have received the message. Hence they don't know if the other participants are actively participating in the decision process. E.g. in the 'who can pick me up at the airport' scenario, it is useful for the sender to know whether the person who lives very close to the airport, but has not yet answered the poll, has effectively received the message.

Furthermore known systems lack reliable audit logs which track how the micro-decision was reached. This is useful for nonrepudiation purposes, for example when a micro-decision involves a bid on an auction or a transaction on a bank account.

### Summary of the Invention

According to the invention there is provided an interactive micro-decision communication platform comprising:
- a plurality of communication devices ;
- a communication network ;
- a server application ; and
- a plurality of client applications installed on said respective plurality of communication devices which can communicate through said telecommunication network with said server application , said client applications being configured such that multiple participants , this means at least one sender and at least one receiver , can select means for replying to a message comprising a plurality of predetermined responses , **characterized in that** said platform for supporting iterative convergence
   towards a micro-decision is configured such that:
- said participants can modify their selection of means for replying to a message comprising a plurality of predetermined responses in a plurality of iterations; and
- said participants are provided with the most recent iteration of said selection of said participants.

This enables participants to iteratively update their preferred responses iteratively while at the same time at all times providing an efficient and compact overview to all participants of the current state of the micro-decision process which enables efficient convergence towards a final decision.

According to a preferred embodiment said message is a modifiable message that is stored in said server application in which said plurality of iterations of said selections are aggregated.

In this way the communication overhead is limited as the client applications only must provide updates to the server application, which can then efficiently determine the most recent state of the message and communicate this to all participants. This also allows for subsequent auditing of the micro-decision process.

According to a further embodiment said means for replying to said message comprising predetermined responses are implemented as a plurality of buttons and said selection is implemented by activating or deactivating one or more of said buttons.

This allows for a user friendly, efficient and intuitive implementation of the selection. Participants don't have to type in a reply. A single push on a button is all that is required to input their selection.

Optionally said plurality of buttons comprises one or more of the following:
- a button selected from a predefined set of buttons by a participant; and/or
- a button instantly created by a participant.

This allows the sender or another participant to create the predetermined responses efficiently.

According to a further optional embodiment selecting said button activates a predetermined behaviour linked to the button. Said predetermined behaviour comprises one or more of the following:
- making a phone call to a predefined number;
- showing a map with a geo-location and/or direct the participant to it;
- opening a web browser at a predetermined webpage,
- sending the current location of one participant to another participant
- installing and/or launching an application on a device of said participant comprising said client application or sending a message to an application on said device;
- storing a new contact in a contact list of said participant;
- showing the contact list one participant, letting said one participant select at least one contact from said contact list and send that contact to another participant;
- sending an instant message, such as for example an sms, to a predefined phone number, optionally with content defined by a participant;
- showing a confirmation popup with predetermined content;
- requesting authorization information; and/or
- showing a graphical animation, playing a sound and/or activating a vibrator device built into the communication device.

This functionality allows for assisting a participant to perform a specific task for replying to the message.

According to a preferred embodiment said communication device comprises a display, preferably said display is a touch screen whereon said means for replying to said message are displayed and wherein said selection is implemented by touching said means for replying to said message.

The platform according to the invention is especially useful in the context of devices that comprise a touch screen as touching one or more buttons on such a screen is a very efficient way for replying as compared to for example typing a reply, which allows for fast cycles of iterations and as such enables convergence towards a micro-decision.

According to a further embodiment said plurality of client applications installed on said respective plurality of communication devices are one or more of the following:
- A "mobile client application", which is a software application which is executed on a mobile device such as a mobile phone or a tablet;
- A "web client application", which is a software application which is executed inside a web browser on a desktop, laptop, virtual machine or on a mobile device;
- An "API client application", which is a software library which is executed on any type of suitable device; and/or
- A "fat client application", which is a software application which is executed on a desktop, laptop or virtual machine.

The client application is not limited a particular class of communication device, mobile phones, personal computers with a web browser or fat client application or suitable personal computers or servers programmed or interacting with a software library are amongst the suitable devices.

According to a preferred embodiment said platform is configured to use a Request / Response Communication method for communicating said message, more specifically in the respective case of :
- said "mobile client application", the CALL / RESPONSE / ACK mechanism is used;
- said "web client application", the google channel api is used;
- said "API client application", a HTTP(S) call or an XMPP message to a web service of said participant is used;
- said "fat client application", the CALL / RESPONSE / ACK mechanism is used or a .HTTP(S) call or an XMPP message to a web service of said participant is used.

This allows reliable communication, which is especially useful if at least one of the participants is making use of a mobile communication network, which are more prone to interruptions or other issues because of for example multi-channel communication issues when a mobile device switches between a Wifi internet connection and 3G mobile data internet connection.

According to a preferred embodiment at least one of said participants can communicate a command to said platform which seals said message such that said participants can subsequently no longer modify said selection.

In this way the micro-decision can be finalised when convergence has sufficiently been reached and this also allows all participants to be updated on the final state of the micro-decision.

According to a preferred embodiment said platform is configured to use a Kick mechanism implemented in said server application to communicate to said client applications that said message or a next iteration of said message is available in the server application. Optionally said platform is configured to use a Wake-up mechanism to activate said client applications when said message or a next iteration of said message is available on the server application.

In this way low latency communication can be set up with devices that are not always on or not always connected to a communication network, such as for example mobile phones.

According to a preferred embodiment said message comprises a timestamp generated by said server application indicating when a specific participant has received said message.

This allows other participants to analyse the behaviour of for example a specific participant which did not yet reply, especially in the context of for example mobile phones, which are not always connected to a communication network. It is further important that this timestamp is generated by the server application as this makes the platform immune to wilful or accidental deviations of the time clock from a communication device when used by a client application.

According to a preferred embodiment said receiver is required to authorize said sender before said sender can send said message to said receiver.

This avoids spam, which is especially useful when dealing with automated machine participants that provided automatically generated messages by a software service.

According to a further embodiment said message can be created on the basis of predefined forms that can be selected by said participants.

This allows for efficient creation of the messages.

According to a further embodiment said server application is executed on one or more physical or virtual servers, running a variety of software comprising:
- XMPP servers (e.g. ejabberd);
- HTTP servers;
- Application servers (e.g. Google App Engine);
- Reverse proxy servers;
- Load balancers; and
- Other services running protocols on top of the IP stack.

In this way a straightforward implementation on general purpose hardware is possible.

### Brief Description of the Drawings

Fig. 1 schematically shows the components of a communication platform according to the invention;

Fig. 2 shows a first screenshot a modifiable message as created or received by a participant;

Fig. 3 shows a second screenshot of the modifiable message of Figure 2 after a plurality of iterations of participant feedback;

Fig. 4 shows a screenshot of a user interface for creating a button; and

Fig. 5 shows a screenshot of a user interface for providing directions to participants on a map.

### Detailed Description of Embodiment(s)

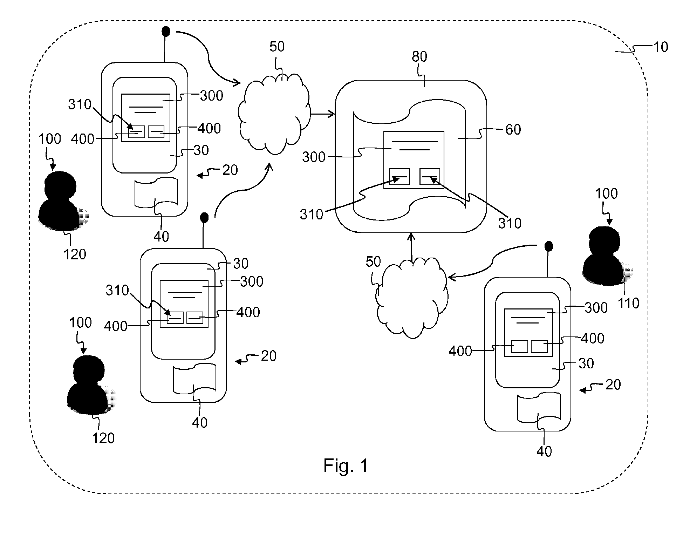

As shown in Figure 1 the iterative micro-decision communication platform 10 comprises a plurality of communication devices 20. These communication devices 20 each comprise an installed client application 40 which can communicate through a suitable communication network 50 with a server application 60 which is executed on a suitable server hardware 80. Said client application 40 allows multiple participants 100, this means at least one sender 110 and at least one receiver 120, to select means 400 for replying to a message 300 comprising a plurality of predetermined responses 310. For said platform 10 in order to provide support for iterative convergence towards a micro-decision according to the invention it is important that the participants 100 can modify their selection of means 400 for replying to a message 300 comprising a plurality of predetermined responses 310 in a plurality of iterations. In this respect it is also important that said participants 100 are provided with the most recent iteration of said selection of said participants 100 and optionally also the entire history of the selection process can be made available to one or more participants 100. When the communication devices 20 are operated by a human participants 100, they preferably comprise a display 30 for displaying the message 300. However instead of human participants 100, it is also possible that machine participants 100, such as for example a software service, are participating in the micro-decision process. In the latter case a display 30 is not required and the interaction with the software service can for example be implemented by a suitable API client application 40.

Preferably said message 300 is a modifiable message 300 that is stored in said server application 60. The selections that are made by the participants 100 and which are communicated by the client application 40 to the server application which subsequently aggregates these selections during possibly a plurality of iterations in the modifiable message 300. This allows the server application 60 to centrally manage the modifiable message 300 during several iterations of the convergence towards a micro-decision in order to reliably determine the state of this modifiable message 300 during the most recent iteration of the selections of the participants 100. This in its turn enables the server application 60 to distribute the state of the modifiable message during the most recent iteration to all the clients applications 40 of the participants.

As shown in the embodiment of the invention as shown in Figure 1 the means 400 for replying to a message 300 comprising predetermined responses 310 are implemented as a plurality of buttons 400 that can be displayed on the display 30. The participants 100 in this way can input their selection by activating or deactivating one or more of said buttons 400. These buttons 400 can be selected from a predefined set of buttons by a participant 100, for example the sender 110 at the time of the creation of the message 300. Alternatively such a button 400 can instantly be created by a participant, for example by the sender 110 at the time of the creation of the message 300 or by a receiver 120 when modifying the message 300 by adding a possibility for selection.

As explained above, in the case of machine participants 100 displaying the buttons 400 on a display 30 is not required and selection of these buttons 400 can be implemented by means of a suitable API client application 40.

Optionally it is also possible to make use of context dependent physical buttons instead of buttons 400 displayed on a display 30. These physical buttons could be correlated to a specific region shown on the display 30, such as for example four coloured buttons which are correlated to four correspondingly coloured regions on the display, or for example "Q: Option 1", "W: Option 2", ... is correlated to a physical button labelled "Q", "W", .... According to a further embodiment these context dependent physical buttons, could be implemented as a button with a built-in display.

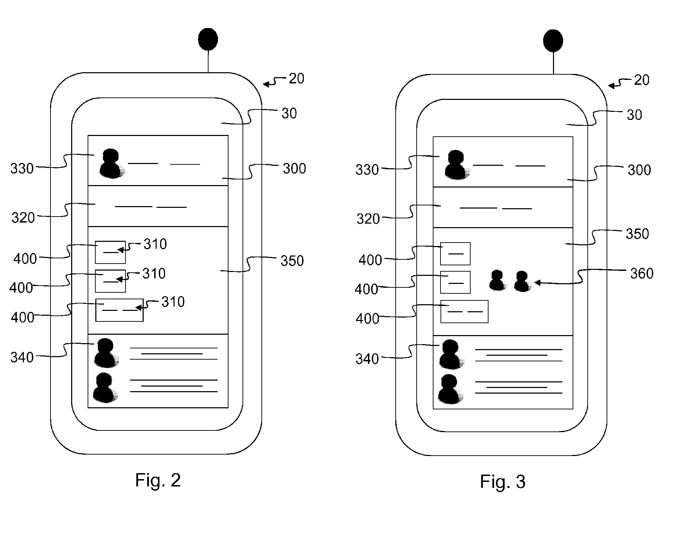

Figure 2 shows the message 300 as shown on a display 30 of communication device 20, such as for example a mobile phone 20 comprising a touch screen 300, when created or received by a participant 100. The message 300 comprises several subsections. A first subsection referred to as the sender subsection 330 comprises details about the participant 100 which is sending the message 300. This sender subsection 330 could for example be used to display an identifier of the sender 110, such as for example the name of the sender 110 and/or a photograph, email address, a textual identifier or a symbol associated with the sender 110 . A second subsection referred to as the participant subsection 340 comprises details about the participants the sender 110 has selected as receivers 120 of the message 300. Similar to the sender subsection 330, participant subsection 340 could comprise an identifier of the receivers 120 and/or the sender 110 such as their name and/or a photograph.

Preferably this participant subsection 340 also comprises information about the status of the message 300, such as for example a timestamp indicating when a specific participant 100 has received the message 300 and optionally on which kind of communication device 20 it was received, for example if it was received on its mobile phone or on a web client and/or a timestamp indicating when a specific participant 100 entered a reply to the message 300. This information is provided by the respective client applications 40 to the server application 60, which subsequently stores this inside the message 300 on the server application 60 and distributes it to the client applications 40 of all the participants 100. It can be particularly advantageous that all participants of the message 300 are informed about whether or not the message 300 was received by other participants 100. Prior art systems at best provided notifications to the sender 110. For example when a sender 110 wants to poll multiple participants 100 whether they are able to pick him up at the airport, it could be useful information for a specific participant whether or not another participant living more close to the airport has actually received the message 300 even if that participant did not yet respond to the message 300. Further information that could be aggregated in the message 300 and displayed in the participant subsection 340 is for example when a sender 110 sent the message 300 or when a participant 100 selected a specific button 400 or when a participant 100 sealed the message 300, as will be explained in further detail below.

A third subsection referred to as the text subsection 320, this text subsection 320 can for example comprise the question for organising the poll as entered by the sender 120, such as for example "Where are we going for dinner tonight?"; "Who can pick me up at the airport?"; or "When are we going to lunch?". Optionally this text subsection 320 could comprise additional elements such as for example images or a video.

A fourth subsection referred to as the button subsection 350 comprises several buttons 400 which can be activated or deactivated by the participants 100 for selecting a specific predefined response to the question in the text subsection 320. These buttons 310 could for example comprise a caption entered by the sender 110 corresponding to the predefined answers, such as for example "Pizza Palace", "Burger Bistro" and "Spaghetti Paradise"; "I'm available" and "I'm busy"; or "14h", "15h" and "today is really not possible". The participants can select or deselect one or more of these predefined answers by activating or deactivating the corresponding buttons 400.

According to a specific embodiment of the invention the predefined answers can be modified during the micro-decision process. One scenario in which this might be useful is for example when implementing a micro-decision during a bidding in an auction in which the displayed replies might be "Current highest bid + 5$", "Current highest bid + 20$" and "Current highest bid +50$", in which the Current highest bid is dynamically updated during the bidding transaction in which multiple participants provide replies.

Optionally, next to the items of the message 300 that can be displayed, the message 300 can comprise one or more properties that can be defined by for example the participant creating the message. Such properties comprise for example one or more of the following:
- Whether participants are allowed to dismiss the message 300, for example by not clicking any button 400;
- Whether participants allowed to select only one predetermined reply or to select multiple predetermined replies;
- A maximum number of times a participant can change its selection of replies;
- Whether the message 300 must auto-destroy when a button clicked or dismissed, this means that the message 300 will be removed from at least the communication device 20. This is particularly useful if the message 300 contains sensitive data such as transactions on a bank account, for example "Amount xxx$ has been deposited on your account. Current balance is xxx$". Optionally an additional property could determine a specific time period after which the message must auto-destroy. Optionally the message 300 could also be removed from the server application 60 such that no trace remains available of the content of the message 300, for example containing the balance of a bank account;
- Whether a confirmation popup must be provided when a button is clicked in order to provide authentication or other non-repudiation information. This means that for example when a Participant has selected a predefined reply to engage in a bid for an auction, a confirmation popup will be displayed stating "Do you really want to bid xxx$?" which must be confirmed by the participant, optionally additionally requesting the Participant for authentication and/or nonrepudiation information such as a pincode, a password or a signature (will be explained further below);
- The answer visibility: All participants can see all replies or only a subset of replies, for example those of their friends that are participants in this message; or only a selected list of participants can see all answers, for example the sender and one or more other participants which function as delegates, or only subset of answers, such as for example those of their friends that are participants in this message.
- Who can seal the message (will be explained further below): Only the sender, a selected group of participants, or all participants in the message. Optionally further properties could determine parameters for automatically sealing the message, also referred to as auto-sealing, for example after a predetermined time delay or after a predetermined number of iterations of replies of one or more participants (will be explained further below).

During the iterative selection of predefined answers all participants 100 are instantly provided with an indication of the selection by the participants 100. As shown in Figure 3, this can be by means of displaying a photograph or another suitable identifier of a specific participant 100 next to the respective buttons 400 the specific participant has selected. In this way all participants 100 can respond in an iterative way to the selections of the other participants 100 and as such convergence to a micro-decision can be enabled. In certain specific embodiments, during this iterative process, participants 100 are capable to select and unselect multiple buttons 400.

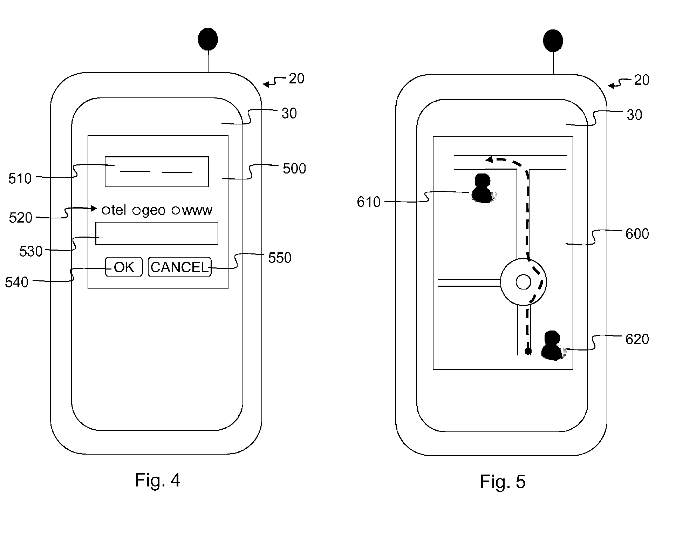

Figure 4 shows an embodiment of a user interface for creation of a button 400 by a participant 100. The sender 110 can for example access this entry form 500 when creating the message 300 on his communication device. As shown in the embodiment of Figure 4 this is implemented by providing a "Define response button" entry form 500 which comprises an area 510 for inputting the caption of the button 400 which corresponds to the predetermined response 310 of the message 300. When this caption has been provided the sender 120 can confirm the creation of this button 400 by selecting the OK button 540 or cancel by selecting the CANCEL button 550. This process can be repeated for the creation of multiple buttons 400 of the message 300. As also shown in Figure 4 it is optionally possible for the sender 120 of the message 300 to create a button 400 with a predetermined behaviour linked to it. When a participant 100 subsequently selects this button 400 this will activate the predetermined behaviour. The sender could for example create a button with a "call me" caption. Subsequently the sender can select in an area 520 for selecting the type of behaviour which behaviour should be attached to the button, in this case "tel" is selected which indicates the behaviour is making a phone call to a predefined number, and an area 530 in which the telephone number to be called can be inputted, for example "+3212123123". Alternatively there is provided a "geo" option for supporting behaviour linked to a geographic location, such as indicating a specific position on a map, or a "www" option for opening a specific web link in a browser.

Alternative types of predetermined behaviour that could be linked to a button comprise for example:
- installing and/or launching an application on a device of a participant comprising a client application or sending a message to an application on this device;
- storing a new contact in a contact list of a participant;
- showing the contact list of a participant, letting this participant select at least one contact from this contact list and send that contact to another participant;
- sending an instant message, such as for example an sms, to a predefined phone number, optionally with content defined by a participant;
- showing a confirmation popup with predetermined content;
- requesting authorization information;
- showing a graphical animation, playing a sound and/or activating a vibrator device built into the communication device.

According to an alternative embodiment as shown in Figure 5, one of the buttons 400 available for a response to a question like "Where are you?" could be a "show my position to the sender" button which when activated by the receiver 120 of the message 300 opens up a map 600 on the display 30 of the mobile phone 20 of the sender 110 with an indication of the geo-location of the receiver 110, for example by means of a suitable identifier 610 placed on the map 600. Optionally as shown in Figure 5 the sender 110 could be provided with suitable directions to the receiver 120 by displaying on the map an identifier 620 for the position of the sender and indicating on the map directions towards the position of the receiver 120. The location data of for example the sender 110 could be transferred to the receivers 120 of the message 300 together with the message 300 at the moment the sender 110 initially sends out this message 300. In this way however there exists the risk that the receiver 110 will be provided with out-dated location information at the moment the receiver 110 responds to the message 300. In order to avoid this, the communication device of receiver 120 could execute a query to the communication device 20 of the sender 110 at the moment the receiver selects a button 400 requiring geographical information. The receiver will then be provided with more up to date information about the position of the sender 110. However in the latter case this additional request to the communication device 20 of the sender 110 could introduce a time delay before the location information can be processed by the communication device 20 of the receiver 120.

Another alternative embodiment of buttons 400 with a predetermined behaviour could for example be a button 400 which when activated sends the current geo-location of one participant to another participant. Optionally this information is only sent after a confirmation by means of an approval popup message. According to still a further embodiment the predetermined behaviour could comprise installing and/or launching an application on the mobile phone 20 of a participant 100 or sending a message to an application on the mobile phone 20. Still further alternatives comprise for example storing a new contact in a contact list of a participant 100 or showing the contact list of one participant, letting said one participant select at least one contact from said contact list and send that contact to another participant or sending an SMS to a predefined phone number, optionally this SMS could be provided with content defined by said sender.

Another alternative embodiment of predetermined behaviour could be that when pressing the button 400, a predetermined confirmation dialog pops up. Such a confirmation dialog could for example present the participant 100 a message such as, "Do you really want to pay $40 for this book?", accompanied with additional confirmation options. Alternatively, participants might be prompted to enter an authentication or non-repudiation credentials to really confirm the micro-decision, which could for example be a commercial transaction such as a bid for an auction or a transaction on a bank account. Such a confirmation might be implemented as a pin code or password, a drawing or a 2D gesture on the display 30, a 3D gesture with the communication device 20 (air signature), sending an SMS to the server application 40 and followed by a further confirmation SMS, the participant generating a digital signature, for example using a token or a smart card, the participant filling in a unique one-time-password, based on list of passwords that was distributed up-front to the participant or based on a secure token generating such passwords, such as for example an RSA or secure-ID token.

According to an embodiment of the invention the sender 110 can communicate a command to the platform 10 which seals the message 300 such that the participants 100 can subsequently no longer modify said selection. This enables the sender 110 to finalize the micro-decision based on the iterative answers received from the receivers 120 and his own wishes, by selecting a final answer and subsequently "seal" the message 300. The sealing of the micro-decision is communicated to all participants 100 through the server application 60. Subsequently the participants 100 cannot click any message buttons 400 anymore. The participants 100 see the finally selected answer by the sender 120 or message leader and are as such informed of the micro-decision that has been made. There are however alternative embodiments possible in which not only the sender 110, but also other participants 100 or a specific selection of participants 100 are able to seal the message 300. In order to cope with problems with network connectivity the sealing action will override any actions which occurred later according to the server application timeline. This means that in this specific scenario: The sender 110 sends a message 300 to a receiver 120 with two buttons 400, button A and button B. Receiver 120 receives this message 300 and makes a selection by selection button A. Sender 110 receives the selection of receiver 120 and inputs his selection. This process goes on during a number of subsequent iterations. During this process however receiver 120 gets disconnected from communication network 50. At that moment sender 110 seals the message 300 while receiver 120 iterates further and changes his selection. Subsequently the connection to the communication network 50 is restored for the receiver 120. At that moment the server application 60 will reject all iterations to the selections made by the receiver 120 after the moment the sender 110 sealed the message 300 and the final selection of the receiver 120 remains at the selection that was known to the server application 60 at the moment the message 300 was sealed. Preferably in this case the receiver 120 will be provided with an error message and a visual indication that something went wrong.

According to a specific embodiment the message could be sealed automatically, for example after a predetermined time delay has elapsed or after a predetermined number of selections of predetermined responses 310 has been entered by one or more participants 100. The message 300 could for example be automatically sealed as soon as one or more participants 100 have performed a predetermined number of selections, for example three or as soon as a predetermined participant 100 has input its selection or as soon as all participants 100 have input at least one selection. This auto-sealing feature is especially useful when automated workflows are implemented or when commercial transactions are involved.

Especially when the micro-decision involves a commercial transaction, such as for example bidding on an auction or a transaction on a bank account non-repudiation becomes an important issue, this means that a reliable audit must be possible of the micro-decision process such that none of the participants can dispute the final outcome of the micro-decision, this means the final state of the message 300 reached after sealing. Therefore according to a preferred embodiment the server application 60 keeps an immutable time and location based audit log of all selections and their optional confirmations, in order to provide non-repudiation in case the micro-decision would be disputed by one of the participants 100. The server application 60 logs when, where and which content is shown on each communication device 20, which buttons 400 are selected, etc.. When the message 300 is sealed the message 300 is digitally signed and notarized by the server application 60. At this point in time the message history is not allowed to be changed and its final state can be calculated from the recorded message history. According to a preferred embodiment this message history can provide an audit log that can be visualized, for example as a list of time ordered events or as a movie where the actions taken by the respective participants are replayed with a time slider. According to an alternative embodiment the audit log only contains an identifier of a specific message and the corresponding buttons, but no specific message content or the caption of the buttons. In this way the operators of the server application 60 can still audit the specific transaction in order to provide non-repudiation, for example participant X has selected button Y when using communication device Z at time xx:xx at location yy:yy:yy, without compromising confidentiality of the specific transaction. In order to provide full non-repudiation involvement of the sender 110 is required to link the identifiers of the message or the buttons as available in the audit log to the specific message content or button captions which remain available to the sender 110 of the message, for example by a local storage means comprising all messages sent by the sender 110.

According to a specific embodiment of the invention, especially when the message 300 contains confidential or sensitive content, such as for example the a statement mentioning the current amount on a bank account, the message 300 could be provided with a property which removes the message 300 from the client application 40. This removal is generally referred to as self-destruct behaviour. This means that for example a predetermined delay after a participant 100 has viewed or received this specific message 300 the client application 40 automatically removes this message. The participant 100 can be informed of this by for example displaying "This message will self-destruct within x seconds." Optionally the message 300 could also be removed from the server application 60 such that no trace remains available of the content of the message 300, for example containing the balance of a bank account.

The setup of the embodiments described above is especially advantageous in the case that the display 30 is a touch screen 30. In this case replying and more specifically iteratively replying by means of the buttons 400 is an easy task which can be swiftly executed by the participant 100 preferably by a single touch on the touch screen 30. This is particularly important when the participant 100 is in a situation where extensive manipulation of the communication device 20 for replying is impolite or illegal, such as for example when the participant 100 is traveling in a car or attending a meeting. Preferably the communication device 20 is able to detect when this situation is occurring for example when a connection with an in-car communication system is established or when the communication device is in a "meeting" operation mode and switches automatically to this one touch communication mode. In this in-car mode, the participant 100 will really experience a one-click response behaviour. When a new important message 300 comes in, the client application 40 will automatically show the message 300 in full screen mode, and the participant 100 can select one or more buttons 400 to answer the message 300.

The client application 40 installed on the communication device 20 could be one or more of several options. If the communication device 20 is a mobile device such as a mobile phone or a tablet then the client application 40 could be implemented as a "mobile client application" which is a software application which is executed on such a mobile device. Alternatively the client application 40 could be implemented as a "web client application" which is a software application which is executed inside a web browser on a desktop, a laptop, a virtual machine or on a mobile device. According to still a further alternative the client application 40 could also be implemented as an "API client application" which is a software library which is executed on any type of suitable device.

In order to enable reliable delivery, especially when one or more participants 100 are using mobile devices the platform 10 according to the invention makes use of a Request / Response Communication method for communicating the message 300 after it was created in the client application 40 of the sender 100 to the server application 60 and subsequently when participants 100 iteratively interact with the message 300. When a participant 100 uses a "mobile client application", the CALL / RESPONSE / ACK mechanism is used.

In general the process for converging towards a micro-decision according to an embodiment of the invention could comprise the following steps. The sender 110 creates a message 300 and sends this message 300 to a plurality of receivers 120. Subsequently this message 300 is wrapped into a system message which triggers the CALL / RESPONSE / ACK mechanism to deliver the message to the server application 60. The server application 60 creates a new system message in which it wraps the message 300, which is subsequently delivered to the client application 40 of the respective receivers 120. The receivers 120 are notified of the new incoming message by the client application 40 and the message will be visualised on the display 30 of the communication device 20 as explained above. The participants 100 can now click one or more response buttons 400 they prefer and when this happens the response is sent to the server using the CALL /RESPONSE / ACK mechanism. The server then delivers this to all participants 100. These last steps are iteratively repeated in order to enable convergence towards a micro-decision. Participants 100 iteratively select or deselect buttons 400 and will be informed of the selections of modifications of the other participants 100. If, as explained above, behaviour is attached to a button 400, then each time such a response button 400 is selected the behaviour is activated. Finally as explained above the sender 110 can communicate a command to said platform 10 which seals the message 300 such that the participants 100 can subsequently no longer modify said selection. This enables the sender 110 to finalise the micro-decision based on the iterative answers received from the receivers 120 and his own wishes, by selecting a final answer and subsequently "seal" the message 300. The sealing of the micro-decision is communicated to all participants 100 through the server application 60. Subsequently the participants 100 cannot click any message buttons 400 anymore. The participants 100 see the finally selected answer by the sender 120 or message leader and are as such informed of the micro-decision that has been made.

According to an alternative embodiment when a participant makes use of a "web client application", the google channel api is used. When a participant makes use of said "API client application", an outgoing HTTP call or an XMPP message to a web service of said participant is used as an implementation of the Request / Response communication method. According to still a further alternative the participant could also make use of a "fat client application", which is a software application which is executed on a desktop, laptop or virtual machine, and makes use of the CALL / RESPONSE / ACK mechanism, or a HTTP(S) call or an XMPP message to a web service as an implementation of the Request / Response communication method.

According to a preferred embodiment of the invention a Kick mechanism is implemented in the server application 60 to communicate to said client applications 40 that a message 300 or a next iteration of a message 300 is available in the server application 60. In order to limit power usage and bandwidth used by the communication device 20 the server application 60 can use a Kick mechanism to notify the client application 40 that at least one message 300 is ready for transmission by the server application 60. Polling mechanisms are not satisfactory since they consume too much battery, especially on a mobile device 20 and frequent reconnection and authentication causes too much load on the server application which reduces the responsiveness of the platform. Also, with polling mechanisms it is not possible to achieve the low latency offered by a Kick mechanism offered by push technology. Several such push technologies are suitable such as for example:
- browser: google channel API or BOSH
- fat application: XMPP
- mobile device: XMPP
- API users can optionally register a web callback.
Such a Kick mechanism provides an already running client application 40 with a token, which is for example a small piece of data containing a unique identifier. When receiving this token, the running client application 40 will connect to the server application 60 in order to retrieve the available data. The Kick mechanism allows for receiving messages with a lower latency as compared to a polling mechanisms, because messages are retrieved as soon as the client application 40 receives the token instead of for example polling the server every two minutes. As indicated above polling is also more resource intensive for the client application 40 as well as the server application 60, as it will generate a lot data transfers and connections that do not transport any messages that are useful for the user.

However for the Kick mechanism the client application 40 must already be up and running on the communication device 20, therefore another mechanism is needed to transfer messages when the client application 40 is not already running. Therefore, according to a preferred embodiment of the invention the platform 10 is configured to use a Wake-up mechanism to activate the client applications 40 when a message 300 or a next iteration of a message 300 is available on the server application 60. Such a Wake-up mechanism can be implemented by making use of for example the Apple Push Notification Service. It is important that the wakeup technology is used sparingly. It's main purpose is to get the client application 40 running. It can invoke costs, can be unreliable, and can cause annoying user experience as it usually will give rise to the user being presented with system messages and associated noises and/or vibrations which will disturb the user unnecessary. Therefore it is preferred not to use the wake-up technology to send the messages 300 themselves, but only to use it to force the client application 40 to start up. Several possibilities for implementing a wake-up mechanism are available. Specific scenarios in which a Wake-up mechanism will be necessary to start up the client application, is for example after a reboot of the communication device 20, specifically if the communication device 20 has no or only partial support for running background services. For communication devices 20 lacking background job support, it is preferred only to use the Wake-up technology only for messages 300 flagged as important.

The Wake-up and/or the Kick mechanism, when used, can optionally transport a short summary of the reason of the usage of the specific mechanism, such as for example "New message from John", which can subsequently be displayed to the user of the client application 40..

In the abovementioned embodiments the request/response communication cycle can be started on two occasions:
- The kick mechanism and/or the wakeup mechanism has notified the client application 40 that data is available on the server application 60;
- The client application 40 has something to send to the server application 60.

From an API point of view the client-server or server-client communication is asynchronous. When a call is invoked, a response handler object is attached to the call. The system serializes and persists the response handler object, and communicates with the other participants. Once a response is received, the response handler object is deserialized, and the response (or error) is fed into the response handler. Once this response is fully processed, an ACKnowledgement message is sent to the other participants. The goal of the communication process is to transfer the CALL, RESPONSE, and ACK system messages. A message 300 or a selection of a response button 400 will typically be embedded in a CALL system message.

In order to:
- enable server processing which is time constrained e.g. server must respond within 30 seconds to a request (e.g. Google App Engine);
- avoid duplicate processing of a call and a response; and
- guarantee delivery or acknowledge non-delivery of system messages, the cycle works as follows using a single-threaded client. Every system message gets an associated message id. The client application 40 investigates a backlog and prepares a message container with all CALLs on which it has not yet received an answer. This message container is sent to the server application, for example as a JSON over HTTPS. Possibly, the container is empty, for example if the client application has received a kick, but has no CALLs ready to send to the server application. The server application 60 then processes at least a subset of these CALLs and prepares a container with the corresponding RESPONSEs. Some CALLs are not processed, for example when the server application 60 doesn't want to process them or cannot process them due to time constraints. These CALLS are simply ignored. The server application 60 also puts server-to-client CALLs in the container. Finally, the server application 60 puts a flag in the container indicating whether "more" server-to-client CALLs are ready to be sent, but not yet included in this container. The container is sent to the client application 40, for example as an HTTP response using JSON over HTTPS. The client then processes at least a subset of the incoming RESPONSEs and at least a subset of the incoming CALLs. Subsequently the client application 40 prepares and sends a container to server application 60. In this container we find for example ACKs for the processed RESPONSEs, RESPONSEs for the processed CALLs and CALLs if there are still CALLs on which the server has not yet given a RESPONSE. Then the server application 60 processes at least a subset of the incoming CALLs, RESPONSEs, ACKs and sends a container back to the client application 40:
- For at least a subset of the received ACKs, the server application 60 marks the corresponding tombstone as fully processed. The tombstone stays in place to avoid duplicate processing of this message. Such a tombstone is a little piece of data that indicates that a CALL is already processed. The presence of such a tombstone ensures that the server application 60 will not process that CALL again, this is specifically useful when the client applications 40 are not always perfectly synchronised with the server application 60;
- For at least a subset of the received RESPONSEs, the server application 60 processes the response and prepares an ACK in the outgoing container;
- For at least a subset of the received CALLs, the server application 60 processes the CALL and prepares a RESPONSE in the outgoing container;
- If more CALLs are ready to send to the client application 40, but not included in this container, the server application 60 indicates that "more" is to come, using a flag in the container.

Subsequently the client application 40 processes at least a subset of the received CALLs, RESPONSEs, ACKs and sends a container back to the server application 60:
- For at least a subset of the received ACKs, the client application 40 marks the corresponding tombstone as fully processed. The tombstone stays in place to avoid duplicate processing of this message 300;
- For at least a subset of the received RESPONSEs, the client application 40 processes the response and prepares an ACK in the outgoing container;
- For at least a subset of the received CALLs, the client application 40 processes the CALL and prepares a RESPONSE in the outgoing container.
- If the outgoing container is empty, and the server application 60 has not indicated that it has more to send to the client application 40, the cycle stops here and the client goes back in a mode where it waits for a kick. In case the container is not empty, the client application 40 sends the container to the server application 60, which will then continue with processing at least a subset of the incoming CALLs, RESPONSEs, ACKs and sends a container back to the client application 40 as described above.

This enables a micro-decision to be reached in an interactive way as the responses from the participants 100 are no longer limited to a one shot response but can be iteratively updated.

Preferably the participant is provided with feedback to indicate whether or not a specific selection of button 400 was communicated successfully by the client application 40 to the server application 60. This could be implemented by a specific symbol, such as for example a yellow or a green flag, indicating the communication is still pending or was successfully transferred respectively.

According to an alternative embodiment the client application could disable the user interface of the client application 40 while transmitting the selection to the server application 60 and indicate that the selection is being transferred to the server. Once the update to the message 300 has been completed, the user interface of the client application 40 is enabled again and this indicates to the user that the selection was successfully transferred to the server application 60. Optionally the user could be provided with the option to cancel the transmission if for example it takes too long or no suitable communication network 50 is available. This is for example very useful when the platform 10 is used for commercial transactions.

According to a preferred embodiment of the invention the receiver 120 is required to authorize the sender 110 before the sender 110 can send a message 300 to the receiver 120. In this way only trusted senders 110 can interact with the receiver 120. This is implemented with a mechanism available to the receiver 120 for acknowledging a sender 110 as a friend. Once labelled a friend the sender 110 can send messages to the receiver 120. As explained above both human participants 100, as well as machine participants 100 can participate. Also machine participants 100, which can be implemented as software services interacting through an API client application 40 can invite other participants to become friends on the platform 10. Upon such an invitation the invitee receives a message from the platform 10 telling that the software service wants to become friends on the platform 10. This invitation contains two buttons: Accept invitation, Decline invitation. When the invitee clicks one of these buttons the service is notified via the receive invitation callback. If the invitee would not yet be a user of the platform 10, the invitee is first invited to become a user of the platform 10 on behalf of the service. As soon as the invitee is registered with the platform 10 he can become friends with the software service.

This is especially useful to avoid spam. In order to still further enhance the trustworthiness of participants 100 on the platform 10 there could be implemented a rating system, in which participants 100 can provide a rating on each other's behaviour. In the specific case that for example a software service labelled "BMW repair channel" instead of providing reminders for scheduled car repair sessions would be spreading advertising, participants 100 could provide a negative rating which will be available when this software service starts sending messages to other users of the platform 10. Participants 100 adversely affected by the messages sent by such a software service are capable to disable the authorisation provided to such an unwanted participant.

In order to still enhance the level of user friendliness for creating a message 300, the message 300 can be created on the basis of predefined forms that can be selected by the participants 100.

In order to still further enhance the reliability of the platform 10 according to the invention, according to an embodiment the messages 300 can be visualized with stylesheets determined by the sender. Preferably the sender uploads the stylesheet upfront to the server application 60 and this stylesheet is identified by a cryptographic hash. In this way the stylesheet can be cached on the client application 40, and be stored on insecure medium such as the SD card of a mobile phone, or a shared hard disk of a computer. A message 300 will refer to the cryptographic hash of the stylesheet. In this way the size of the message 300 can stay small which allows for an efficient transmission, but the visualization can still be rich and secure as it is provided by the stylesheet. Authenticity of the cryptographic hash is required to avoid phishing scenarios, where someone maliciously modifies the stylesheet of the message on the client application 40, in order to confuse the receiver of the message 300. Genuine participants 100 of the platform 10 cannot confuse each other, since the server application 60 logs all uploaded stylesheets, and an audit history will allow detection of a participant X which has generated a stylesheet impersonating a software service of bank Y, which is can subsequently be punished by law.

According to an embodiment of the invention the server application 60 is executed on one or more physical or virtual servers 80, running a variety of software such as for example XMPP servers (e.g. ejabberd, Openfire Server, ...); HTTP servers; Application servers (e.g. Google App Engine); Reverse proxy servers; Load balancers; and other services running protocols on top of the IP stack.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An interactive micro-decision communication platform (10) comprising:
• a plurality of communication devices (20);
• a communication network (50);
• a server application (60); and
• a plurality of client applications (40) installed on said respective plurality of communication devices (20) which can communicate through said telecommunication network (50) with said server application (60), said client applications (40) being configured such that multiple participants (100), this means at least one sender (110) and at least one receiver (120), can select means (400) for replying to a message (300) comprising a plurality of predetermined responses (310),
**characterized in that** said platform (10) for supporting iterative convergence
towards a micro-decision is configured such that:
• said participants (100) can modify their selection of means (400) for replying to a message (300) comprising a plurality of predetermined responses (310) in a plurality of iterations; and
• said participants (100) are provided with the most recent iteration of said selection of said participants (100).

2. A platform according to claim 1, **characterised in that** said message (300) is a modifiable message (300) that is stored in said server application (60) in which said plurality of iterations of said selections are aggregated.

3. A platform according to claim 1 or 2, **characterised in that** said means (400) for replying to said message (300) comprising predetermined responses (310) are implemented as a plurality of buttons (400) and said selection is implemented by activating or deactivating one or more of said buttons (400).

4. A platform according to claim 3, **characterised in that** said plurality of buttons (400) comprises one or more of the following:
• a button (400) selected from a predefined set of buttons (400) by a participant (100); and/or
• a button (400) instantly created by a participant (100).

5. A platform according to claim 3 or 4, **characterised in that** selecting said button (100) activates a predetermined behaviour linked to the button (100).

6. A platform according to claim 5, **characterised in that** said predetermined behaviour comprises one or more of the following:
• making a phone call to a predefined number;
• showing a map with a geo-location and/or direct the participant to it;
• opening a web browser at a predetermined webpage,
• sending the current location of one participant to another participant (optionally after an approval popup)
• installing and/or launching an application on a device of said participant comprising said client application or sending a message to an application on said device;
• storing a new contact in a contact list of said participant;
• showing the contact list one participant, letting said one participant select at least one contact from said contact list and send that contact to another participant;
• sending an instant message, such as for example an sms, to a predefined phone number, optionally with content defined by a participant (100);
• showing a confirmation popup with predetermined content;
• requesting authorization information; and/or
• showing a graphical animation, playing a sound and/or activating a vibrator device built into the communication device (20).

7. A platform according to any of the preceding claims, **characterised in that** said communication device (20) comprises a display (30), preferably said display (30) is a touch screen whereon said means (400) for replying to said message (300) are displayed and wherein said selection is implemented by touching said means (400) for replying to said message (300).

8. A platform according to any of the preceding claims, **characterised in that** said plurality of client applications (40) installed on said respective plurality of communication devices (20) are one or more of the following:
• A "mobile client application", which is a software application which is executed on a mobile device such as a mobile phone or a tablet;
• A "web client application", which is a software application which is executed inside a web browser on a desktop, laptop, virtual machine or on a mobile device;
• An "API client application", which is a software library which is executed on any type of suitable device; and/or
• A "fat client application", which is a software application which is executed on a desktop, laptop or virtual machine.

9. A platform according to claim 8, **characterised in that** said platform (10) is configured to use a Request / Response Communication method for communicating said message (300), more specifically in the respective case of :
• said "mobile client application", the CALL / RESPONSE / ACK mechanism is used;
• said "web client application", the google channel api is used;
• said "API client application", an HTTP(S) call or an XMPP message to a web service of said participant is used;
• said "fat client application", the CALL / RESPONSE / ACK mechanism is used or a .HTTP(S) call or an XMPP message to a web service of said participant is used.

10. A platform according to any of the preceding claims, **characterised in that** at least one of said participants (100) can communicate a command to said platform (10) which seals said message (300) such that said participants (100) can subsequently no longer modify said selection.

11. A platform according to any of the preceding claims, **characterised in that** said platform (10) is configured to use a Kick mechanism implemented in said server application (60) to communicate to said client applications (40) that said message (300) or a next iteration of said message (300) is available in the server application (60), and/or
**in that** said platform (10) is configured to use a Wake-up mechanism to activate said client applications (40) when said message (300) or a next iteration of said message (300) is available on the server application (60).

12. A platform according to any of the preceding claims, **characterised in that** said message (300) comprises a timestamp generated by said server application indicating when a specific participant (100) has received said message (300).

13. A platform according to any of the preceding claims, **characterised in that** said receiver (120) is required to authorize said sender (110) before said sender (110) can send said message (300) to said receiver (120).

14. A platform according to any of the preceding claims, **characterised in that** said message (300) can be created on the basis of predefined forms that can be selected by said participants (100).

15. A platform according to any of the preceding claims, **characterised in that** said server application (60) is executed on one or more physical or virtual servers (80), running a variety of software comprising:
• XMPP servers (e.g. ejabberd);
• HTTP servers;
• Application servers (e.g. Google App Engine);
• Reverse proxy servers;
• Load balancers; and
• Other services running protocols on top of the IP stack.
